# EUROPÄISCHE PATENTSCHRIFT

(11) **EP 2 742 667 B1**
(45) Veröffentlichungstag und Bekanntmachung des Hinweises auf die Patenterteilung: **26.08.2015**
(21) Anmeldenummer: 12733086.8
(22) Anmeldetag: 03.07.2012
(51) Int. Cl.: H04L 29/08, G06F 3/12, H04L 29/06

(54) **VERFAHREN ZUM BETREIBEN EINES NETZWERKSYSTEMS**
METHOD FOR OPERATING A NETWORK SYSTEM
PROCÉDÉ DE FONCTIONNEMENT D'UN SYSTÈME DE RÉSEAU

(30) Priorität: 09.08.2011 DE 102011109748
(43) Veröffentlichungstag der Anmeldung: 18.06.2014
(73) Patentinhaber: EHT Vermögensverwaltung UG, 44801 Bochum (DE)
(72) Erfinder: HORST, Matthias, 44801 Bochum (DE)
(74) Vertreter: Cohausz & Florack
(86) Internationale Anmeldenummer: PCT/EP2012/062911
(87) Internationale Veröffentlichungsnummer: WO 2013/020756

(56) Entgegenhaltungen:
- EP-A2- 0 999 494
- EP-A2- 1 936 490
- WO-A2-02/33531

## Beschreibung

Die Erfindung betrifft ein Verfahren zum Betreiben eines Netzwerksystems mit mindestens einer Clienteinrichtung, mindestens einer Verwaltungseinrichtung und mindestens einer Druckeinrichtung. Die Erfindung betrifft darüber hinaus ein Netzwerksystem, ein Computerprogramm und ein Computerprogrammprodukt.

In vielen Unternehmen, aber auch im privaten Bereich, werden vermehrt Netzwerksysteme eingesetzt, um verschiedene elektrische Geräte miteinander zu verbinden. Ein Netzwerksystem kann beispielsweise einen oder mehrere Server, eine oder mehrere Druckeinrichtungen und eine oder mehrere Clienteinrichtungen umfassen, welche über ein drahtloses und/oder drahtgebundenes Netzwerk miteinander kommunizieren können. Bei den Druckeinrichtungen eines Netzwerksystems kann es sich insbesondere von den Clienteinrichtungen gemeinsam nutzbare Druckeinrichtungen handeln. Es versteht sich, dass in einem Netzwerksystem ein oder mehrere Multifunktionsgeräte vorhanden sein können, welche verschiedene Funktionen, wie Drucken, Scannen, Kopieren, Faxen, in einem Gerät vereinen.

Damit in einem Netzwerk eine Druckeinrichtung von einer Vielzahl von Clienteinrichtungen gemeinsam genutzt werden kann, ist in der Regel eine Servereinrichtung, wie ein Druckserver, vorgesehen. Ein auf einer Clienteinrichtung erzeugter Druckauftrag wird von dieser zunächst an den Druckserver übertragen. Dieser speichert den Druckauftrag, also die Druckdaten, ab. Im Allgemeinen ist eine Warteschleife in dem Druckserver vorgesehen, um die Ausführung der Druckaufträge in einer vorgebbaren Reihenfolge zu verwalten. Steht die Druckeinrichtung für den Druckauftrag der Clienteinrichtung bereit, überträgt der Druckserver den entsprechenden Druckauftrag zum Drucken an die Druckeinrichtung.

Entsprechende Netzwerksysteme und Verfahren zum Betreiben der Netzwerksysteme sind aus dem Stand der Technik bekannt. Sie weisen jedoch die Nachteile eines erhöhten Ressourcenbedarfs und Wartungsaufwands auf. Nicht nur, dass eine zusätzliche Servereinrichtung mit einer entsprechenden Rechen- und Speicherleistung erforderlich ist. Sondern eine Servereinrichtung bringt darüber hinaus stets einen erhöhten Wartungsbedarf und somit entsprechende Kosten mit sich.

Zur Lösung des Problems ist aus der US 6 115 132 A ein Verfahren zum Betreiben eines Netzwerksystems mit einer Mehrzahl von Clienteinrichtungen, mindestens einer Druckeinrichtung in Form eines Druckers und einem Druckserver bekannt. Der Druckserver dient insbesondere dazu, die Reihenfolge der Druckaufträge zu verwalten, wobei die Druckaufträge selbst auf der Clienteinrichtung verbleiben. Nachdem die Clienteinrichtung Druckinformationen ohne die eigentlichen Druckdaten an den Druckserver übertragen hat, steuert dieser die Reihenfolge der an der Druckeinrichtung auszuführenden Druckaufträge. Der Druckserver überträgt hierfür aktiv ein Freigabesignal an die Clienteinrichtung, wenn der Drucker zum Drucken des entsprechenden Auftrags bereit ist. Nach Empfang des Freigabesignals überträgt die Clienteinrichtung die Druckdaten zum Drucker. Schließlich informiert der Drucker den Druckserver über die Beendigung des Auftrags.

Nachteilig an diesem Verfahren ist jedoch, dass der Druckserver aktiv eine Nachricht an die Clienteinrichtung übertragen muss. Dies gestaltet sich jedoch aufgrund der in der heutigen Zeit steigenden Sicherheitsanforderungen häufig schwierig. Grund hierfür ist, dass eine Clienteinrichtung oder eine zwischengeschaltete Einrichtung heutzutage in der Regel einen Schutzmechanismus, beispielsweise eine Firewall, aufweist. Eine Firewall beschränkt jedoch den Zugriff von externen Einrichtungen auf die Clienteinrichtung. Somit wird durch die Firewall auch eine von dem Druckserver aktiv ausgesandte Freigabenachricht blockiert.

Die Dokument US 6 256 750 B1 offenbart ein Netzwerksystem umfassend eine Mehrzahl von Clientcomputern, einen Server und einen Netzwerkdrucker, die über ein Netzwerk miteinander verbunden sind. Ein zu druckendes Dokument bzw. die erzeugten Druckdaten bleibt/en zunächst in dem Clientcomputer gespeichert und es werden lediglich Druckinformationen an den Server übertragen. Der Server kann die Druckreihenfolge festlegen, wobei die Reihenfolge u.a. abhängig von Prioritätsinformationen, die in den Druckinformationen vorhanden sein können, festlegt werden kann. Der Server ist ferner eingerichtet, der Zustand des Netzwerkdruckes zu überwachen. Stellt der Server fest, dass der Netzwerkdrucker für einen Druckauftragt zur Verfügung steht, so informiert der Server den entsprechenden Client. Der Client überträgt daraufhin der Druckauftragt unmittelbar an den Netzwerkdrucker.

Aus dem Stand der Technik ist zur Lösung des Problems bekannt, die Schutzanwendung für jede externe Einrichtung, wie eine Vielzahl an Druckservern explizit freizuschalten, so dass eine Übertragung des Freigabesignals an die Clienteinrichtung ermöglicht wird. Eine entsprechende Konfiguration einer Schutzanwendung ist jedoch zum einen aufwendig, insbesondere bei einer Vielzahl von freizuschaltenden Netzwerkgeräten, und überfordert einen Benutzer schnell. Zum anderen kann eine fehlerhafte Freischaltung dazu führen, dass unberechtigte Dritte auf die Clienteinrichtung zugreifen können.

Es ist daher die Aufgabe der Erfindung, ein Verfahren zum Betreiben eines Netzwerksystems zur Verfügung zu stellen, welches in einfacher Weise eine Reduktion des Ressourcenbedarfs und des Wartungsaufwands bei einem gleichzeitig geringen Sicherheitsrisiko ermöglicht.

Die Aufgabe wird erfindungsgemäß durch ein Verfahren zum Betreiben eines Netzwerksystems gemäß Anspruch 1 gelöst. Insbesondere wird die Aufgabe erfindungsgemäß bei einem Verfahren zum Betreiben eines Netzwerksystems mit mindestens einer Clienteinrichtung, mindestens einer Verwaltungseinrichtung und mindestens einer Druckeinrichtung gelöst. Das Verfahren umfasst die Schritte:
- Bereitstellen eines ersten Auftrags von der Clienteinrichtung zur Ausführung durch die mindestens eine Druckeinrichtung,
- Speichern des Auftrags in einer Speichereinrichtung der Clienteinrichtung,
- Übertragen einer Auftragsanfrage von der Clienteinrichtung an die Verwaltungseinrichtung, wobei die Ausführungsreihenfolge von Aufträgen von der Verwaltungseinrichtung verwaltet wird,
- Übertragen von Anfragen in ersten vorgebbaren Zeitabständen von der Clienteinrichtung an die Verwaltungseinrichtung, ob die Druckeinrichtung zur Ausführung des Auftrags der Clienteinrichtung zur Verfügung steht, und
- Übertragen eines Freigabesignals als Antwort auf die Anfrage der Clienteinrichtung von der Verwaltungseinrichtung an die Clienteinrichtung, wenn die Druckeinrichtung zur Ausführung des Auftrags der Clienteinrichtung zur Verfügung steht.

Im Gegensatz zum Stand der Technik wird erfindungsgemäß eine Blockierung eines Freigabesignals von einer Verwaltungseinrichtung an eine Clienteinrichtung in einfacher Weise auch bei einem Vorhandensein einer Schutzanwendung verhindert, indem eine Kommunikation (stets) von der Clienteinrichtung initiiert wird. Mit anderen Worten verhält sich die Verwaltungseinrichtung (stets) passiv, während die Clienteinrichtung aktiv eine Kommunikation mit der Verwaltungseinrichtung initiieren kann.

Bei der mindestens einen Clienteinrichtung kann es sich beispielsweise um einen Computer, einen Tablet-PC, ein Smartphone, ein Personal Digital Assistant (PDA), ein Notebook, etc. handeln. Bei der Verwaltungseinrichtung kann es sich um eine Verarbeitungseinrichtung mit Prozessormitteln, Speichermitteln, Schnittstellen, etc. handeln, wie einem Computer. Insbesondere umfasst die Verwaltungseinrichtung eine Serverkomponente zum Verwalten der Reihenfolge von abzuarbeitenden Aufträgen. Beispielsweise ist es möglich, dass die Verwaltungseinrichtung von einem (speziellen) Clientcomputer oder der Druckeinrichtung gebildet wird. Im Gegensatz zu einer Druckservereinrichtung sind jedoch die Leistungsanforderungen und der Wartungsbedarf an eine Verwaltungseinrichtung signifikant reduziert. Unter einer Druckeinrichtung kann vorliegend eine Ressource verstanden werden, welche für eine Clienteinrichtung eine Funktion oder einen Dienst bereitstellt. Mit anderen Worten kann eine Druckeinrichtung von bevorzugt einer Mehrzahl an Clienteinrichtungen gemeinsam genutzt werden.

Ein Auftrag, wie insbesondere ein Druckauftrag, kann von der mindestens einen Clienteinrichtung zur Durchführung auf der mindestens einen Druckeinrichtung bereitgestellt werden. Beispielsweise kann ein Druckauftrag durch eine Anwendung der Clienteinrichtung generiert werden.

Der Auftrag bzw. die Auftragsdaten kann/können lokal in der Clienteinrichtung gespeichert werden. Beispielsweise kann die Clienteinrichtung eine Auftragskomponente umfassend eine Client- und eine Serverkomponente aufweisen. Die Auftragskomponente kann insbesondere vorgesehen sein, um die Speicherung und Abarbeitung des Auftrags zu überwachen. Die Clienteinrichtung überträgt eine Auftragsanfrage bevorzugt über ein Netzwerk an die Verwaltungseinrichtung.

Eine Auftragsanfrage umfasst Auftragsinformationsdaten. Bevorzugt umfasst eine Auftragsanfrage nur Daten, welche zur Verwaltung der Abarbeitungsreihenfolge von Aufträgen erforderlich sind. Beispielsweise kann zumindest die Art des Auftrags und/oder die ausgewählte Druckeinrichtung übertragen werden. Die Daten zur Durchführung des Auftrags, wie beispielsweise die Druckdaten zum Durchführen eines Druckauftrags, werden nicht übertragen. Eine lokale Speicherung des Auftrags bzw. der Auftragsdaten bringt den Vorteil mit sich, dass eine Servereinrichtung mit hohem Ressourcenbedarf entfallen kann.

Ferner überträgt die Clienteinrichtung Anfragen an die Verwaltungseinrichtung. Insbesondere kann die Clienteinrichtung anfragen, ob die Druckeinrichtung zur Ausführung ihres Auftrags zur Verfügung steht, ob also die Clienteinrichtung bzw. der Auftrag der Clienteinrichtung an der Reihe ist. Vorzugsweise kann die Clienteinrichtung in vorgebbaren Zeitabständen bei der Verwaltungseinrichtung anfragen bzw. anpollen.

Die Verwaltungseinrichtung kann zumindest bei Detektion, dass die Druckeinrichtung zur Ausführung des Auftrags der Clienteinrichtung zur Verfügung steht, also die Clienteinrichtung an der Reihe ist, ein Freigabesignal in Form einer Antwort an die Clienteinrichtung übertragen. Mit anderen Worten überträgt die Verwaltungseinrichtung nicht aktiv ein Freigabesignal, sondern nur nach einer Anfrage der Clienteinrichtung. Das Freigabesignal wird daher nicht von einer Schutzanwendung der Clienteinrichtung oder einer zwischengeschalteten Einrichtung geblockt.

Es versteht sich, dass die ersten Zeitabstände derart gewählt sein können, dass nahezu keine (unnötigen) Leerzeiten auftreten, also Zeiten, in denen kein Auftrag ausgeführt wird, obwohl Auftragsanfragen vorliegen. Es versteht sich, dass nach einer ersten Anfrage die Druckeinrichtung bereits zur Verfügung stehen kann.

In einfacher Weise kann erfindungsgemäß der Ressourcenbedarf und der Wartungsaufwand ohne eine Verminderung der Sicherheit insbesondere einer Clienteinrichtung reduziert werden.

Grundsätzlich kann die Verwaltung der Reihenfolge der abzuarbeitenden Druckaufträge in beliebiger Weise verwaltet werden. Es ist erkannt worden, dass die Reihenfolge der Aufträge besonders einfach und gleichzeitig ohne Bevorzugung von bestimmten Aufträgen verwaltet werden kann, wenn ein Ticketsystem eingesetzt wird. Vorzugsweise kann gemäß einer ersten Ausführungsform des erfindungsgemäßen Verfahrens der empfangenen Auftragsanfrage von der Verwaltungseinrichtung eine Rangnummer zugeordnet werden. Die Ausführungsreihenfolge der Aufträge kann von den Rangnummern der Auftragsanfragen abhängen. Insbesondere kann in der Reihenfolge des Eintreffens jeder Auftragsanfrage eine chronologische Rangnummer vergeben werden. Insbesondere kann das FIFO-Prinzip ("first in first out") realisiert werden. Beispielsweise können die Rangnummern aufsteigend vergeben werden. In diesem Fall ist der Druckauftrag mit der niedrigsten Rangnummer der aktuell durchzuführende Druckauftrag, also der aktive Auftrag.

Darüber hinaus kann nach einem Empfang der Auftragsanfrage als Antwort von der Verwaltungseinrichtung an die Clienteinrichtung zumindest die der Auftragsanfrage zugeordnete Rangnummer übertragen werden. Vorzugsweise können darüber hinaus Informationen über den (ungefähren) Zeitpunkt, an dem die Druckeinrichtung zur Ausführung des Auftrags zur Verfügung steht, übertragen werden. Ferner kann vorzugsweise zusätzlich die der aktuell ausgeführten Auftragsanfrage zugeordnete Rangnummer übertragen werden. Es versteht sich, dass anstatt dieser Rangnummer auch die Anzahl der noch abzuarbeitenden Aufträge an die Clienteinrichtung übertragen werden kann. Besonders bevorzugt kann zusätzlich mindestens ein erster Zeitabstand übertragen werden.

Mit anderen Worten kann die Clienteinrichtung von der Verwaltungseinrichtung Informationen erhalten, wann ihr Auftrag von der Druckeinrichtung (wahrscheinlich) ausgeführt wird. Beispielsweise kann diese Information dem Benutzer angezeigt werden. Darüber hinaus kann die Information genutzt werden, um den ersten Zeitabstand zu bestimmen und eine Anfrage an die Verwaltungseinrichtung zu senden. Vorzugsweise kann jedoch ein erster Zeitabstand von der Verwaltungseinrichtung vorgegeben werden.

Gemäß einer weiteren Ausführungsform kann vorgesehen sein, dass die Verwaltungseinrichtung auf jede Anfrage der Clienteinrichtung eine Antwort überträgt. Insbesondere kann mittels der Antwort eine aktuelle Information über den (ungefähren) Zeitpunkt, an dem die Druckeinrichtung zur Ausführung des Auftrags zur Verfügung steht, übertragen werden. Beispielsweise kann die aktuell aktive Rangnummer übertragen werden. Zusätzlich oder alternativ kann auf jede Anfrage ein neuer erster Zeitabstand vorgegeben werden. Der erste Zeitabstand kann variabel sein und an aktuellen Zuständen der Druckeinrichtung und/oder der Verwaltungseinrichtung und/oder der Clienteinrichtung angepasst werden. Es versteht sich, dass alternativ auch ein konstanter Zeitabstand vorgesehen sein kann.

Ein weiterer Vorteil ist, dass die vorstehend genannten Informationen nicht von einer Schutzeinrichtung geblockt werden können. Grund hierfür ist wiederum, dass diese Informationen (nur) in Form einer Antwort auf eine Anfrage der Clienteinrichtung an diese übertragen werden können. Die Verwaltungseinrichtung verhält sich insbesondere passiv.

Gemäß einer weiteren Ausführungsform des erfindungsgemäßen Verfahrens kann nach einem Empfang des Freigabesignals der gespeicherte Auftrag von der Clienteinrichtung an die Druckeinrichtung zur Ausführung des Auftrags übertragen werden. Bevorzugt unmittelbar nach einem Empfang des Freigabesignals kann der Auftrag, beispielsweise ein Druckauftrag, an die Druckeinrichtung übertragen werden. Auch ohne einen separaten Druckserver können Druckaufträge zeitnah ausgeführt werden.

Nach einer Übertragung eines Auftrags von der Clienteinrichtung an die Druckeinrichtung kann gemäß einer weiteren Ausführungsform des erfindungsgemäßen Verfahrens vorgesehen sein, dass die Clienteinrichtung die Durchführung des Auftrags überwacht. Vorzugsweise können in zweiten vorgebbaren Zeitabständen von der Clienteinrichtung Zustandsanfragen an die Druckeinrichtung übertragen werden. Die zweiten Zeitabstände können bevorzugt konstant sein und beispielsweise auf zuvor durchgeführte Tests basieren. Nach einem Empfang einer Anfrage kann die Druckeinrichtung den Zustand des durchzuführenden Auftrags an die Clienteinrichtung in Form einer Antwort senden. Beispielsweise kann bei einem Druckauftrag die Anzahl der noch zu druckenden Seiten, der bereits gedruckten Seiten, Fehlermeldungen, etc. übertragen werden.

Eine Unterbrechung der Durchführung des Auftrags beispielsweise aufgrund eines technischen Defekts der Druckeinrichtung, kann zeitnah erkannt werden.

Ein Zustand des durchzuführenden Auftrags ist insbesondere die (erfolgreiche) Beendigung des Auftrags durch die Druckeinrichtung. Vorzugsweise kann nach Beendigung des Auftrags der Clienteinrichtung von der Druckeinrichtung als Antwort auf eine Anfrage der Clienteinrichtung ein erstes Beendigungssignal an die Clienteinrichtung übertragen werden. Die Clienteinrichtung kann zeitnah über die Beendigung des. Auftrags unterrichtet werden.

Gemäß einer weiteren Ausführungsform kann die Clienteinrichtung Zustandsnachrichten über den Zustand des durchzuführenden Auftrags in vorgebbaren Zeitabständen an die Verwaltungseinrichtung übertragen. Die vorgebbaren Zeitabstände können zuvor zwischen der Verwaltungseinrichtung und der Clienteinrichtung vereinbart worden sein. Insbesondere ermöglicht dies der Verwaltungseinrichtung, einen Ausfall einer Clienteinrichtung beispielsweise aufgrund eines technischen Defekts, einer Abschaltung, etc. zu detektieren.

Bevorzugt kann eine Zustandsnachricht nach jedem Empfang einer Zustandsantwort der Druckeinrichtung an die Verwaltungseinrichtung gesendet werden. Die Verwaltungseinrichtung ist (stets) über den Fortschritt des Auftrags informiert. Die Zustandsinformationen können von der Verwaltungseinrichtung genutzt werden, um erste Zeitabstände für anstehende Auftragsanfragen aktuell und zeitnah zu bestimmen. Auch kann im Falle einer Fehlermeldung bzw. einer technischen Störung der Druckeinrichtung vorteilhafterweise die Verwaltungseinrichtung eingerichtet sein, die Clienteinrichtungen, welche Auftragsanfragen an die Verwaltungseinrichtung übertragen haben, über die Störung insbesondere in Form einer Antwort auf eine Anfrage zu unterrichten. Beispielsweise kann nach einer Mitteilung über eine Störung eine Clienteinrichtung die Auftragsanfrage zurückziehen. Eine andere Druckeinrichtung zur Bearbeitung des Auftrags kann von der Clienteinrichtung ausgewählt werden. Die Auftragsanfrage kann von der Verwaltungseinrichtung aus der Warteschlange entfernt werden. In einfacher Weise kann eine hohe Ausführungsgeschwindigkeit der Aufträge auch bei Störungen gewährleitstet werden.

Ferner kann insbesondere nach einem Empfang des ersten Beendigungssignals von der Clienteinrichtung ein zweites Beendigungssignal von der Clienteinrichtung an die Verwaltungseinrichtung übertragen werden. Die Verwaltungseinrichtung kann zeitnah über die Beendigung des Auftrags informiert werden. Nach einem Empfang des zweiten Beendigungssignals kann die entsprechende Auftragsanfrage von der Verwaltungseinrichtung aus der Warteschlange entfernt werden. Der nächste Auftrag kann durchgeführt werden. Vorzugsweise handelt es sich bei dem nächsten Druckauftrag um die der nächsten Rangnummer zugeordnete Auftragsanfrage.

Gemäß einer weiteren Ausführungsform des erfindungsgemäßen Verfahrens, kann ein Auftragsaufwand zur Durchführung des Auftrags der Clienteinrichtung von der Druckeinrichtung bestimmt werden. Der bestimmte Auftragsaufwand kann für eine Abrechnung von der Druckeinrichtung an die Clienteinrichtung übertragen werden. Darüber hinaus kann vorgesehen sein, dass der Auftragsaufwand von der Clienteinrichtung an einen Accounting-Server übertragen wird. Es kann wünschenswert sein, den Aufwand zur Bearbeitung eines Auftrags dem Auftraggeber, beispielsweise dem Benutzer der Clienteinrichtung, in Rechnung zu stellen. Hierfür können Aufwandsparameter des Auftrags und der Auftraggeber bestimmt werden.

Ein Auftragsaufwand eines Druckauftrags kann beispielsweise die Anzahl der gedruckten Seiten, die Druckart, das Druckmedium, etc. sein. So kann pro gedruckte Seite ein bestimmter Betrag anfallen. Die Druckeinrichtung kann zumindest eingerichtet sein, um einen Aufwandsparameter zu bestimmen. Dieser kann an die Clienteinrichtung und/oder einen Accounting-Server zur Abrechnung übertragen werden. Vorzugsweise können die bestimmten Aufwandsdaten im Rahmen einer Zustandsantwort von der Druckeinrichtung an die Clienteinrichtung übertragen werden.

Neben einer Bestimmung des Auftragsaufwands kann es ferner erforderlich sein, den Auftraggeber zu bestimmen. Beispielsweise kann der Benutzer aus dem eingesetzten Übertragungsprotokoll bestimmt werden, wie dem Internet Printing Protocol (IPP) oder dem Line Printer Remote (LPR) Protokoll. Auch können andere Quellen verwendet werden, wie eine digitale Signaturkarte oder dergleichen. In einfacher Weise können von einer gemeinsam nutzbaren Druckeinrichtung durchgeführte Aufträge einem Auftraggeber in Rechnung gestellt werden.

Ein weiterer Aspekt der Erfindung ist ein Netzwerksystem mit mindestens einer Clienteinrichtung, mindestens einer Verwaltungseinrichtung und mindestens einer Druckeinrichtung, wobei die Clienteinrichtung eingerichtet ist zum Bereitstellen eines ersten Auftrags zur Ausführung durch die mindestens eine Druckeinrichtung, die Clienteinrichtung eine Speichereinrichtung eingerichtet zum Speichern des Auftrags aufweist, die Clienteinrichtung eingerichtet ist zum Übertragen einer Auftragsanfrage an die Verwaltungseinrichtung, wobei die Verwaltungseinrichtung eingerichtet ist zum Verwalten der Ausführungsreihenfolge der Aufträge. Die Clienteinrichtung ist eingerichtet zum Übertragen von Anfragen in vorgebbaren Zeitabständen an die Verwaltungseinrichtung, ob die Druckeinrichtung zur Ausführung des Auftrags der Clienteinrichtung zur Verfügung steht. Die Verwaltungseinrichtung ist eingerichtet zum Senden eines Freigabesignals als Antwort auf eine Anfrage der Clienteinrichtung, wenn die Druckeinrichtung zur Ausführung des Auftrags der Clienteinrichtung zur Verfügung steht.

Das Netzwerksystem ist insbesondere zur Durchführung des zuvor beschriebenen Verfahrens geeignet.

Ein weiterer Aspekt der vorliegenden Erfindung ist ein Computerprogramm mit Instruktionen ausführbar auf einem Prozessor derart, dass ein Netzwerksystem mittels des zuvor beschriebenen Verfahrens betrieben wird.

Ein noch weiterer Aspekt der vorliegenden Erfindung ist ein Computerprogrammprodukt umfassend ein zuvor beschriebenes Computerprogramm mit Instruktionen ausführbar auf einem Prozessor derart, dass ein Netzwerksystem mittels des zuvor beschriebenen Verfahrens betrieben wird.

Die Merkmale des Verfahrens und des Netzwerksystems sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein. Ferner können Merkmale der Beschreibung und/oder der abhängigen Ansprüche durch Softwarekomponenten und/oder Hardwarekomponenten gebildet sein.

Es gibt nun eine Vielzahl von Möglichkeiten, das erfindungsgemäße Verfahren zum Betreiben eines Netzwerksystems, das erfindungsgemäße Netzwerksystem, das erfindungsgemäße Computerprogramm und das erfindungsgemäße Computerprogrammprodukt auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Netzwerksystems gemäß der Erfindung; und
- Fig. 2: ein Flussdiagramm eines Ausführungsbeispiels eines Verfahrens zum Betreiben eines Netzwerksystems gemäß der vorliegenden Erfindung.

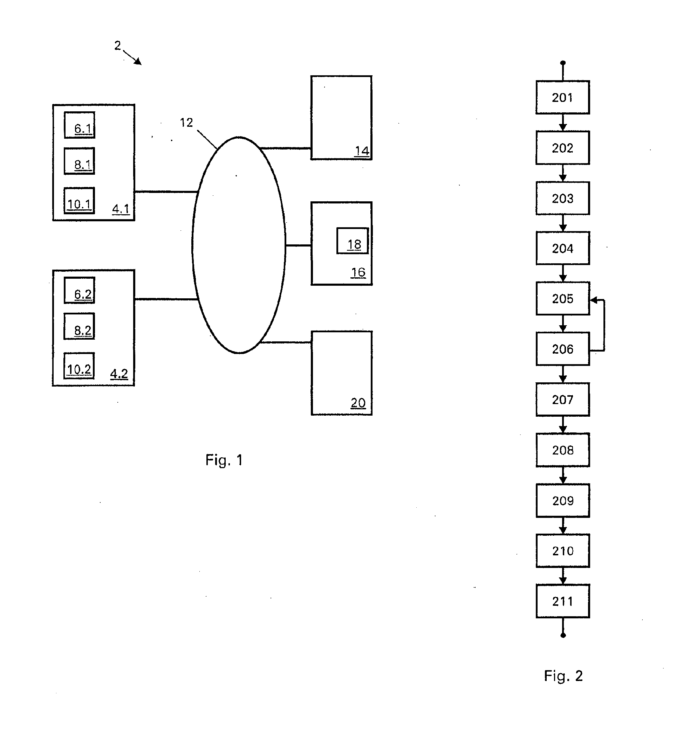

Figur 1 zeigt eine schematische Ansicht eines Ausführungsbeispiels eines Netzwerksystems 2 gemäß der vorliegenden Erfindung.

Das dargestellte Netzwerksystem 2 umfasst eine erste Clienteinrichtung 4.1 und eine zweite Clienteinrichtung 4.2. Es versteht sich, dass eine Vielzahl von Clienteinrichtungen oder nur eine Clienteinrichtung vorgesehen sein kann.

Als Clienteinrichtungen 4.1, 4.2 können Personal-Computer, Tablet-PCs, Smartphones, Notebooks, etc. vorgesehen sein. Vorzugsweise weist eine Clienteinrichtung 4.1, 4.2 Verarbeitungsmittel auf, wie einen Prozessor, Speichermittel, Schnittstellen und dergleichen. Grundsätzlich können verschiedene Clienteinrichtungen 4.1, 4.2 vorgesehen sein.

Insbesondere kann eine Clienteinrichtung 4.1, 4.2 eine Anwendung 6.1, 6.2 aufweisen. Die Anwendung 6.1, 6.2 kann insbesondere eingerichtet sein, um einen Auftrag, wie ein Druckauftrag, zu erstellen. Beispielsweise kann es sich bei der Anwendung 6.1, 6.2 um ein Textverarbeitungsprogramm handeln.

Darüber hinaus weist vorliegend eine Clienteinrichtung 4.1, 4.2 eine Auftragskomponente 8.1, 8.2, wie eine Druckkomponente 8.1, 8.2 zur Verwaltung der Druckaufträge auf der Clienteinrichtung 4.1, 4.2 auf. Die Druckkomponente 8.1, 8.2 kann eine Doppelfunktion aufweisen und insbesondere aus einer Client- und einer Serverkomponente gebildet sein.

Ferner umfasst eine Clienteinrichtung 4.1, 4.2 mindestens eine Speichereinrichtung 10.1, 10.2, wie eine Festplatte oder dergleichen. Die Speichereinrichtung 10.1, 10.2 ist insbesondere dazu konfiguriert, Aufträge, wie erstellte Druckaufträge, zu speichern. Mit anderen Worten können Druckaufträge vor dem Drucken lokal in einer der Clienteinrichtung 4.1, 4.2 zugeordneten Speichereinrichtung 10.1, 10.2 gespeichert werden.

Es versteht sich, dass gemäß anderen Varianten der Erfindung eine Clienteinrichtung 4.1, 4.2 zur lokalen Speicherung der Druckaufträge auch mit einer alternativen oder zusätzlichen Speichereinrichtung, wie einer externen Festplatte, einem USB-Stick, etc., verbunden sein kann.

Wie bereits beschrieben wurde, weist eine Clienteinrichtung 4.1, 4.2 Schnittstellen auf. Insbesondere kann eine geeignete Schnittstelle zur Anbindung der Clienteinrichtung 4.1, 4.2 an ein Netzwerk 12 vorgesehen sein. Das Netzwerk 12 kann ein lokales oder ein nichtlokales Netzwerk 12 sein. Darüber hinaus kann es sich um ein drahtloses oder ein drahtgebundenes Netzwerk 12 handeln. Beispielhafte Netzwerke 12 sind ein Local Area Network (LAN), eine Wireless LAN (WLAN), ein Wide Area Network (WAN), etc. Es versteht sich, dass unterschiedliche Teilnetzwerke auch zu einem Netzwerk 12 kombiniert werden können.

Ferner kann der Figur 1 entnommen werden, dass das Netzwerksystem 2 mindestens eine Druckeinrichtung 14 aufweist. Beispielsweise kann ein Netzwerkdrucker 14 vorgesehen sein. Es versteht sich, dass ein Netzwerkssystem 2 eine Vielzahl an (unterschiedlichen) Druckeinrichtungen aufweisen kann.

Ein Netzwerkdrucker 14 kann eine Anzeige zum Beispiel in Form eines Displays aufweisen und einen Prozessor, Speichermittel, Schnittstellen, etc. umfassen. Insbesondere kann die Druckeinrichtung 14 mit dem Netzwerk 12 verbunden sein. Bei dem Netzwerkdrucker 14 kann es sich um eine gesicherte Druckeinrichtung 14 handeln, die eine Autorisierung eines Benutzers an der Druckeinrichtung 14 zum Ausdrucken eines Dokuments oder dergleichen erfordert.

Darüber hinaus ist eine Verwaltungseinrichtung 16 vorgesehen. Die Verwaltungseinrichtung 16 kann einen Prozessor, Speichermittel, Schnittstellen, etc. umfassen. Die Verwaltungseinrichtung 16 kann eine Serverkomponente umfassen und insbesondere eingerichtet sein, die Druckreihenfolge an der mindestens einen Druckeinrichtung 14 zu verwalten. Die Verwaltungseinrichtung 16 kann eine Speichereinrichtung 18 aufweisen, um Auftragsanfragen von Druckaufträgen zu speichern und eine Warteschlange zur Verfügung zu stellen. Die Speichereinrichtung 18 kann nach dem FIFO-Prinzip betrieben werden. Jedoch sind auch andere Regelungen zur Verwaltung der Druckreihenfolge denkbar. Beispielsweise können Auftragsanfragen unterschiedliche Prioritäten aufweisen, wobei Auftragsanfragen mit höheren Prioritäten Vorrang vor Auftragsanfragen mit geringerer Priorität haben können.

Insbesondere kann die Verwaltungseinrichtung 16 eingerichtet sein, jeder empfangenen Auftragsanfrage eine Rangnummer zu zuordnen. Beispielsweise kann ein geeigneter Nummerngenerator vorgesehen sein.

Schließlich umfasst im vorliegenden Ausführungsbeispiel das Netzwerksystem 2 einen Accounting-Server 20. Der Accounting-Server 20 kann eingerichtet sein, den Aufwand des Durchführens des Auftrags abzurechnen. Bei einem Druckauftrag kann beispielsweise in Abhängigkeit der gedruckten Seiten, der Art des Druckes, der Art des Druckmediums, etc. der Druckauftrag eines Benutzers abgerechnet werden. Beispielsweise können in dem Accounting-Server 20 Benutzerkonten verwaltet und entsprechende Angaben gespeichert werden.

Figur 2 zeigt ein Flussdiagramm eines Ausführungsbeispiels eines Verfahrens zum Betreiben eines Netzwerksystems 2, wie es beispielhaft in Figur 1 gezeigt ist. Nachfolgend wird das Verfahren zum Betreiben eines Netzwerksystems 2 am Beispiel von Druckaufträgen näher erläutert.

In einem ersten Schritt 201 kann ein Auftrag, insbesondere ein Druckauftrag, von einer Clienteinrichtung 4.1, 4.2 bereitgestellt werden. Vorzugsweise kann ein Druckauftrag von der Clienteinrichtung 4.1, 4.2 beispielsweise mittels einer Anwendung 6.1, 6.2 generiert werden.

Der bereitgestellte Druckauftrag kann zur weiteren Verarbeitung von der Druckkomponente 8.1, 8.2 in Schritt 202 empfangen werden. Insbesondere kann die Druckkomponente 8.1, 8.2 einen Druckauftrag auf einem LPR-Port oder alternativ auf einem IPP-Port empfangen.

In einem nächsten Schritt 203 kann die Druckkomponente 8.1, 8.2 veranlassen, dass eine Auftragsanfrage, insbesondere eine Druckauftragsanfrage, von der Clienteinrichtung 4.1, 4.2 über das Netzwerk 12 an die Verwaltungseinrichtung 16 übertragen wird. Die Auftragsanfrage kann zumindest eine Angabe über die Art des Auftrags und/oder die Druckeinrichtung 14, die den Auftrag ausführen soll, umfassen. Ferner kann zusätzlich der Benutzername, Anzahl an zu druckenden Seiten, etc. übertragen werden. Für die Übertragung und Kommunikation können geeignete Übertragungsprotokolle eingesetzt werden, wie dem Internet Printing Protocol (IPP) oder dem Line Printer Remote (LPR) Protokoll.

Vorzugsweise parallel zur Übertragung der Auftragsanfrage an die Verwaltungseinrichtung 16 kann der Druckauftrag, also die zu druckenden Daten, in einer (lokalen) Speichereinrichtung 10.1, 10.2, welche der Clienteinrichtung 4.1, 4.2 zugeordnet ist, gespeichert werden. Ein herkömmlicher Druckserver kann entfallen. Es versteht sich, dass die beiden zuvor genannten Schritte auch seriell durchgeführt werden können.

Nach einem Empfang der Auftragsanfrage von der Clienteinrichtung 4.1, 4.2 kann die Verwaltungsreinrichtung 16 der Auftragsanfrage eine Rangnummer zuordnen (Schritt 204). Insbesondere kann ein Nummerngenerator vorgesehen sein, welcher in chronologischer Reihenfolge jedem empfangenen Druckauftrag eine Rangnummer zuweist. Die Auftragsanfrage kann zusammen mit der zugeordneten Rangnummer in einem Auftragsspeicher 18 gespeichert werden. Es versteht sich, dass weitere Daten, wie die Anzahl der zu druckenden Seiten, die Druckart, die ausgewählte Druckeinrichtung 14, etc., gespeichert werden können. Beispielsweise kann der Auftragsspeicher 18 in Form einer Warteschlage realisiert sein. Aufgrund der im Vergleich zu einem Druckauftrag geringen Datenmenge einer Auftragsanfrage sind der Ressourcenbedarf und der Wartungsaufwand einer Verwaltungseinrichtung 16 gering.

In Schritt 204 kann die Verwaltungseinrichtung 16 zudem eine Antwort auf die Auftragsanfrage der Clienteinrichtung 4.1, 4.2 an die Clienteinrichtung 4.1, 4.2 übertragen. Insbesondere kann die der Auftragsanfrage zugeordnete Rangnummer übertragen werden. Vorzugsweise können darüber hinaus Informationen über den (ungefähren) Zeitpunkt, an dem die Druckeinrichtung 14 zur Ausführung des Auftrags zur Verfügung steht, übertragen werden. Es kann ferner bevorzugt die Rangnummer der Auftragsanfrage, die aktuell von der Druckeinrichtung 14 durchgeführt wird, übertragen werden. Dies ermöglicht der Clienteinrichtung 4.1, 4.2 aus der Differenz der Rangnummern abzuleiten, wann der Druckauftrag der Clienteinrichtung 4.1, 4.2 abgearbeitet sein wird. Anstatt der aktuell durchgeführten Rangnummer kann auch die Differenz, also die Anzahl der vor der Clienteinrichtung 4.1, 4.2 in der Warteschlange befindlichen Auftragsanfragen, übertragen werden.

Beispielsweise kann die Rangnummer der Auftragsanfrage der Clienteinrichtung 4.1, 4.2 fünfzehn sein und die aktuelle durchgeführte Auftragsanfrage elf. Hieraus kann die Clienteinrichtung 4.1, 4.2 schließen, dass vor der Durchführung des eigenen Druckauftrags drei weitere Druckaufträge abgearbeitet werden.

Es versteht sich, dass die Zuordnung und Generierung der Rangnummern beliebig erfolgen kann. Grundsätzlich können auch Buchstaben oder sonstige Zeichen vergeben werden, solange eine Durchführungsreihenfolge verwaltet werden kann und Auftragsanfragen in geeigneter Weise in eine Warteschlange einsortiert werden können.

Besonders bevorzugt ist es, wenn die Verwaltungseinrichtung 16 einen ersten Zeitabstand an die Clienteinrichtung 4.1, 4.2 (zusätzlich) überträgt. Der erste Zeitabstand gibt an, (bis) wann die Clienteinrichtung 4.1, 4.2 eine nächste Anfrage an die Verwaltungseinrichtung 16 übertragen soll (Schritt 205). Es kann vorgesehen sein, dass die Auftragsanfrage der Clienteinrichtung 4.1, 4.2 gelöscht wird, wenn diese nicht innerhalb dem vorgegebenen Zeitabstand eine Anfrage an die Verwaltungseinrichtung 16 überträgt. Hierdurch kann ein Druckstau aufgrund einer inaktiven Clienteinrichtung 4.1, 4.2 verhindert werden. Andererseits wird der Clienteinrichtung 4.1, 4.2 auch (stets) dieser erste Zeitabstand zur Übertragung einer Anfrage eingeräumt, auch wenn die Druckeinrichtung 14 bereits zur Durchführung des Druckauftrags zur Verfügung steht. Insbesondere kann jedoch der erste Zeitabstand derart gewählt werden, dass eine derartige Verzögerung nahezu nicht auftreten kann. Der erste Zeitabstand kann insbesondere von der Anzahl an Auftragsanfragen und/oder der Art der Auftragsanfragen abhängen.

Indem die zuvor genannten Informationen als Antwort auf die Auftragsanfrage der Clienteinrichtung 4.1, 4.2 übertragen werden, werden diese nicht durch eine Schutzanwendung, wie einer Firewall, blockiert.

In einem nächsten Schritt 205 kann, wie bereits beschrieben wurde, nach einem ersten vorgebbaren Zeitabstand eine Anfrage an die Verwaltungseinrichtung 16 übertragen werden. Insbesondere kann die Clienteinrichtung 4.1, 4.2 anfragen, ob die Druckeinrichtung 14 zur Bearbeitung des Druckauftrags der Clienteinrichtung 4.1, 4.2 zur Verfügung steht.

In einem nächsten Schritt 206 kann die Verwaltungseinrichtung 16 auf die Anfrage der Clienteinrichtung 4.1, 4.2 eine Antwort an die Clienteinrichtung 4.1, 4.2 übertragen. Insbesondere kann die Verwaltungseinrichtung 16 auf jede Anfrage der Clienteinrichtung 4.1, 4.2 eine Antwort übertragen. Beispielsweise kann mittels der Antwort eine aktuelle Information über den (ungefähren) Zeitpunkt, an dem die Druckeinrichtung zur Ausführung des Auftrags zur Verfügung steht, übertragen werden. Es kann die aktuell aktive Rangnummer übertragen werden. Zusätzlich oder alternativ kann auf jede Anfrage ein neuer erster Zeitabstand vorgegeben werden. Der erste Zeitabstand kann variabel sein und aktuellen Zuständen der Druckeinrichtung 14 und/oder der Verwaltungseinrichtung 16 angepasst werden. Es versteht sich, dass alternativ auch ein konstanter Zeitabstand vorgesehen sein kann. Eine Bestimmung des ersten Zeitabstands kann entfallen.

Die Schritte 205 und 206 können wiederholend durchgeführt werden. Mit anderen Worten kann die Clienteinrichtung 4.1, 4.2 die Verwaltungseinrichtung 16 in vorgebbaren Zeitabständen anpollen. Wie bereits beschrieben wurde, wird durch das aktive Senden von Anfragen und die Übertragung von Informationen als Antwort auf diese Anfragen verhindert, dass entsprechende Informationen beispielsweise durch eine Firewall der Clienteinrichtung 4.1, 4.2 geblockt werden können.

Steht die Druckeinrichtung 14 zur Durchführung des Druckauftrags zur Verfügung, ist also der Druckauftrag der Clienteinrichtung 4.1, 4.2 an der Reihe, so überträgt die Verwaltungseinrichtung 16 als Antwort in Schritt 206 ein Freigabesignal an die Clienteinrichtung 4.1, 4.2.

In einem nächsten Schritt 207 überträgt dann die Clienteinrichtung 4.1, 4.2, insbesondere mittels der Druckkomponente 8.1, 8.2, den gespeicherten Druckauftrag (direkt) an die Druckeinrichtung 14.

Nach einem Empfang des Druckauftrags der Clienteinrichtung 4.1, 4.2 wird dieser in Schritt 208 von der Druckeinrichtung 14 aufgeführt. Während der Ausführung des Druckauftrags von der Druckeinrichtung 14 kann die Ausführung von der Clienteinrichtung 4.1, 4.2 überwacht werden. Insbesondere kann die Clienteinrichtung 4.1, 4.2 die Druckeinrichtung 14 anpollen. Es können in vorgebbaren zweiten Zeitabständen Zustandsanfragen an die Druckeinrichtung 14 übertragen werden. Die Druckeinrichtung 14 kann als Antwort Informationen über den Zustand der Durchführung des Druckauftrags an die Clienteinrichtung 4.1, 4.2 übertragen. Beispielsweise können Informationen über den Fortschritt des Druckens, eine technische Störung, etc. übertragen werden. Auch in diesem Fall unterbleibt eine Blockung der ausgesandten Information aufgrund der Übertragung als Antwort auf eine Anfrage.

Ferner kann die Clienteinrichtung 4.1, 4.2 die empfangenen Zustandsinformationen an die Verwaltungseinrichtung weiterleiten (Schritt 209). Die Clienteinrichtung 4.1, 4.2 und die Verwaltungseinrichtung 16 können Zeitabstände zur Übertragung der Zustandsinformationen vereinbart haben. In Abhängigkeit dieser Informationen können beispielsweise die vorgebbaren ersten Zeitabstände für wartende Druckaufträge bzw. Clienteinrichtungen 4.1, 4.2 bestimmt werden. Ferner kann bei einem Ausbleiben einer Anfrage zu einem vereinbarten Zeitpunkte auf einen technischen Defekt der Clienteinrichtung 4.1, 4.2, eine Abschaltung der Clienteinrichtung 4.1, 4.2 oder dergleichen geschlossen werden. Geeignete Maßnahmen können ergriffen werden.

Empfängt die Clienteinrichtung 4.1, 4.2 als Antwort auf eine Anfrage ein erstes Beendigungssignal von der Druckeinrichtung 14, kann sie dies an die Verwaltungseinrichtung 16 melden. Beispielsweise kann von der Clienteinrichtung 4.1, 4.2 ein zweite Beendigungssignal an die Verwaltungseinrichtung 16 gesendet werden. Die beiden Beendigungssignale können gleich sein. Mit anderen Worten kann die Clienteinrichtung 4.1, 4.2 das erste Beendigungssignal an die Verwaltungseinrichtung 16 weiterleiten.

Nach einem Empfang des zweiten Beendigungssignals entfernt die Verwaltungseinrichtung 16 die entsprechende Auftragsanfrage aus der Warteschlange des Auftragsspeichers (Schritt 210). Die wartenden Druckaufträge rücken auf und die Clienteinrichtung 4.1, 4.2, dessen Druckauftrag die nächste Rangnummer aufweist, wird in Form einer Antwort auf eine Anfrage dieser Clienteinrichtung 4.1, 4.2 darüber unterrichtet.

Es versteht sich, dass eine Verwaltungseinrichtung 16 eine Mehrzahl an Druckeinrichtungen verwalten kann. Beispielsweise kann für jede Druckeinrichtung eine separate Warteschlange vorgesehen sein.

Zusätzlich zu dem ersten Beendigungssignal kann die Druckeinrichtung 14 Abrechnungsdaten des ausgeführten Druckauftrags an die Clienteinrichtung 4.1, 4.2 übertragen. Bei den Abrechnungsdaten kann es sich beispielsweise um die (tatsächlich) gedruckten Seiten, die Art des Druckes (z.B. farbig oder schwarzweiß), die Papierart, etc. handeln. Insbesondere kann die Druckeinrichtung 14 mit einem Zähler versehen sein. Der Stand des Zählers kann vor dem Drucken eines Druckauftrags mit dem Zählerstand nach dem Drucken des Druckauftrags verglichen werden. Die Differenz kann an die Clienteinrichtung 4.1, 4.2 übertragen werden. Beispielsweise können die Abrechnungsdaten zusammen mit dem ersten Beendigungssignal übertragen werden.

Die Abrechnungsdaten können zunächst lokal in der Clienteinrichtung 4.1, 4.2 übertragen werden. Dies kann insbesondere dann vorgesehen sein, wenn der Accounting-Server 20 aktuell nicht erreichbar ist. Anschließend können diese an den Accounting-Server 20 übertragen werden. Es versteht sich, dass die Abrechnungsdaten auch ohne eine lokale Zwischenspeicherung in der Clienteinrichtung 4.1, 4.2 an den Accounting-Server 20 zur Abrechnung weitergeleitet werden können (Schritt 211).

## Patentansprüche

1. Verfahren zum Betreiben eines Netzwerksystems (2) mit mindestens einer Clienteinrichtung (4.1,4.2), mindestens einer Verwaltungseinrichtung (16) und mindestens einer Druckeinrichtung (14), umfassend:
- Bereitstellen eines ersten Auftrags von der Clienteinrichtung (4.1, 4.2) zur Ausführung durch die mindestens eine Druckeinrichtung (14),
- Speichern des Auftrags in einer Speichereinrichtung (10.1, 10.2) der Clienteinrichtung (4.1, 4.2),
- Übertragen einer Auftragsanfrage von der Clienteinrichtung (4.1, 4.2) an die Verwaltungseinrichtung (16), wobei die Ausführungsreihenfolge von Aufträgen von der Verwaltungseinrichtung (16) verwaltet wird,
- Übertragen von Anfragen in ersten vorgebbaren Zeitabständen von der Clienteinrichtung (4.1, 4.2) an die Verwaltungseinrichtung (16), ob die Druckeinrichtung (14) zur Ausführung des Auftrags der Clienteinrichtung (4.1, 4.2) zur Verfügung steht, und
- Übertragen eines Freigabesignals nur als Antwort auf die Anfrage der Clienteinrichtung (4.1, 4.2) von der Verwaltungseinrichtung (16) an die Clienteinrichtung (4.1, 4.2), wenn die Druckeinrichtung (14) zur Ausführung des Auftrags der Clienteinrichtung (4.1,4.2) zur Verfügung steht, und
- Übertragen des gespeicherten Auftrags von der Clienteinrichtung (4.1, 4.2) direkt an die Druckeinrichtung (14) zur Ausführung des Auftrags nach einem Empfang des Freigabesignals.

2. Verfahren nach Anspruch 1, **dadurch gekennzeichnet, dass**
- der empfangenen Auftragsanfrage von der Verwaltungseinrichtung (14) eine Rangnummer zugeordnet wird,
- wobei die Ausführungsreihenfolge der Aufträge von den Rangnummern der Auftragsanfragen abhängt.

3. Verfahren nach Anspruch 2, **dadurch gekennzeichnet, dass** nach einem Empfang der Auftragsanfrage als Antwort von der Verwaltungseinrichtung (16) an die Clienteinrichtung (4.1, 4.2) zumindest die der Auftragsanfrage zugeordnete Rangnummer übertragen wird, vorzugsweise zusätzlich die der aktuell ausgeführten Auftragsanfrage zugeordnete Rangnummer übertragen wird, und besonders bevorzugt zusätzlich mindestens ein erster Zeitabstand übertragen wird.

4. Verfahren nach einem der vorherigen Ansprüche, **dadurch gekennzeichnet, dass**
- während der Ausführung des Auftrags in zweiten vorgebbaren Zeitabständen von der Clienteinrichtung (4.1, 4.2) Zustandsanfragen an die Druckeinrichtung (14) übertragen werden, und
- nach einem Empfang einer Zustandsanfrage von der Druckeinrichtung (14) eine Zustandsantwort an die Clienteinrichtung (4.1, 4.2) übertragen wird.

5. Verfahren nach Anspruch 4, **dadurch gekennzeichnet, dass** nach einem Empfang einer Zustandsantwort von der Clienteinrichtung (4.1, 4.2) eine Zustandsnachricht an die Verwaltungseinrichtung (16) übertragen wird.

6. Verfahren nach einem der vorherigen Ansprüche, **dadurch gekennzeichnet, dass**
- ein Auftragsaufwand zur Durchführung des Auftrags der Clienteinrichtung (4.1,4.2) von der Druckeinrichtung (14) bestimmt wird, und
- der bestimmte Auftragsaufwand für eine Abrechnung von der Druckeinrichtung (14) an die Clienteinrichtung (4.1, 4.2) und/oder einen Accounting-Server (20) übertragen wird.

7. Netzwerksystem (2) mit mindestens einer Clienteinrichtung (4.1, 4.2), mindestens einer Verwaltungseinrichtung (16) und mindestens einer Druckeinrichtung (14),
- wobei die Clienteinrichtung (4.1, 4.2) eingerichtet ist zum Bereitstellen eines ersten Auftrags zur Ausführung durch die mindestens eine Druckeinrichtung (14),
- wobei die Clienteinrichtung (4.1,4.2) eine Speichereinrichtung (10.1, 10.2) eingerichtet zum Speichern des Auftrags aufweist,
- wobei die Clienteinrichtung (4.1, 4.2) eingerichtet ist zum Übertragen einer Auftragsanfrage an die Verwaltungseinrichtung (16), und
- wobei die Verwaltungseinrichtung (16) eingerichtet ist zum Verwalten der Ausführungsreihenfolge der Aufträge,
**dadurch gekennzeichnet, dass**
- die Clienteinrichtung (4.1, 4.2) eingerichtet ist zum Übertragen von Anfragen in vorgebbaren Zeitabständen an die Verwaltungseinrichtung (16), ob die Druckeinrichtung (14) zur Ausführung des Auftrags der Clienteinrichtung (4.1,4.2) zur Verfügung steht, und
- die Verwaltungseinrichtung (16) eingerichtet ist zum Senden eines Freigabesignals nur als Antwort auf eine Anfrage der Clienteinrichtung (4.1, 4.2), wenn die Druckeinrichtung (14) zur Ausführung des Auftrags der Clienteinrichtung (4.1, 4.2) zur Verfügung steht,
- wobei nach einem Empfang des Freigabesignals der gespeicherte Auftrag von der Clienteinrichtung (4.1,4.2) direkt an die Druckeinrichtung (14) zur Ausführung des Auftrags übertragen wird.

8. Computerprogramm mit Instruktionen ausführbar auf einem Prozessor derart, dass ein Netzwerksystem (2) mittels des Verfahrens nach einem der Patentansprüche 1 bis 6 betrieben wird.

9. Computerprogrammprodukt umfassend ein Computerprogramm mit Instruktionen ausführbar auf einem Prozessor derart, dass ein Netzwerksystem (2) mittels des Verfahrens nach einem der Patentansprüche 1 bis 6 betrieben wird.

## Claims

1. A method for operating a network system (2) with at least one client device (4.1, 4.2), at least one management device (16) and at least one printing device (14),
- providing a first order from the client device (4.1,4.2) for execution by the at least one printing device (14),
- storing the order in a memory device (10.1, 10.2) of the client device (4.1, 4.2),
- transmitting of an order request from the client device (4.1, 4.2) to the management device (16), wherein the order of execution of the orders is managed by the management device (16),
- transmitting of requests at first presettable time intervals from the client device (4.1, 4.2) to the management device (16) to establish whether the printing device (14) is available for executing the order from the client device (4.1, 4.2), and
- transmitting of an enable signal from the management device (16) to the client device (4.1, 4.2) only as a response to the request from the client device (4.1, 4.2) when the printing device (14) is available for executing the order from the client device (4.1, 4.2), and
- transmitting of the stored order from the client device (4.1, 4.2) directly to the printing device (14) for execution of the order after receipt of the enable signal.

2. The method according to claim 1, **characterised in that**
- a priority number is assigned by the management device (16) to the received order request,
- wherein the order of execution of the orders depends on the priority numbers of the order requests.

3. The method according to claim 2, **characterised in that**, as a response from the management device (16) to the client device (4.1, 4.2) after a receipt of the order request, at least the priority number assigned to the order request is transmitted, preferably also the priority number assigned to the order request currently being executed is transmitted, and particularly preferably also at least a first time interval is transmitted.

4. The method according to any one of the preceding claims, **characterised in that**
- status requests are transmitted from the client device (4.1, 4.2) to the printing device (14) at second presettable time intervals during the execution of the order, and
- a status response is transmitted to the client device (4.1, 4.2) by the printing device (14) after receipt of a status request.

5. The method according to claim 4, **characterised in that** a status report is transmitted to the management device (16) after receipt of a status response by the client device (4.1,4.2).

6. The method according to any one of the preceding claims, **characterised in that**
- an order cost for executing the order from the client device (4.1,4.2) is determined by the printing device (14), and
- the determined order cost for a statement of account is transmitted by the printing device (14) to the client device (4.1, 4.2) and/or an accounting server (20).

7. A network system (2) with at least one client device (4.1, 4.2), at least one management device (16) and at least one printing device (14),
- wherein the client device (4.1, 4.2) is configured to provide a first order for execution by the at least one printing device (14),
- wherein the client device (4.1, 4.2) comprises a memory device (10.1, 10.2) configured to store the order,
- wherein the client device (4.1, 4.2) is configured to transmit an order request to the management device (16), and
- wherein the management device (16) is configured to manage the order of execution of the orders,
**characterised in that**
- the client device (4.1,4.2) is configured to transmit requests at presettable time intervals to the management device (16) to establish whether the printing device (14) is available for executing the order from the client device (4.1, 4.2), and
- the management device (16) is configured to transmit an enable signal only as a response to a request from the client device (4.1, 4.2) when the printing device (14) is available for executing the order from the client device (4.1, 4.2),
- wherein, after receipt of the enable signal, the stored order is transmitted from the client device (4.1, 4.2) directly to the printing device (14) for execution of the order.

8. A computer program with instructions that can be executed on a processor in such a way that a network system (2) is operated by means of the method according to any one of claims 1 to 6.

9. A computer program product comprising a computer program with instructions that can be executed on a processor in such a way that a network system (2) is operated by means of the method according to anyone of claims 1 to 6.

## Revendications

1. Procédé pour l'exploitation d'un système de réseau (2) avec au moins un dispositif client (4.1, 4.2), au moins un dispositif gestionnaire (16) et au moins un dispositif d'impression (14), comprenant :
- la mise à disposition d'une première instruction du dispositif client (4.1, 4.2) pour l'exécution par l'au moins un dispositif d'impression (14),
- enregistrement de l'instruction dans un dispositif de stockage (10.1,10.2) du dispositif client (4.1, 4.2),
- transmission d'une demande d'instruction du dispositif client (4.1, 4.2) au dispositif gestionnaire (16), l'ordre d'exécution d'instructions étant géré par le dispositif gestionnaire (16),
- transmission de demandes selon des premiers intervalles de temps prédéfinissables par le dispositif client (4.1, 4.2) au dispositif gestionnaire (16), pour savoir si le dispositif d'impression (14) est disponible pour l'exécution de l'instruction du dispositif client (4.1, 4.2), et
- transmission d'un signal de validation seulement en réponse à la demande du dispositif client (4.1, 4.2) par le dispositif gestionnaire (16) au dispositif client (4.1, 4.2), lorsque le dispositif d'impression (14) est disponible pour l'exécution de l'instruction du dispositif client (4.1, 4.2), et
- transmission de l'instruction enregistrée, du dispositif client (4.1,4.2) directement au dispositif d'impression (14), pour l'exécution de la demande après réception du signal de validation.

2. Procédé selon la revendication 1, **caractérisé en ce que**
- un numéro de rang est attribué par le dispositif gestionnaire (16) à la demande d'instruction reçue,
- l'ordre d'exécution des instructions dépendant du numéro de rang des demandes d'instruction.

3. Procédé selon la revendication 2, **caractérisé en ce qu'**après réception de la demande d'instruction, au moins le numéro de rang attribué à la demande d'instruction est transmis en réponse par le dispositif gestionnaire (16) au dispositif client (4.1, 4.2), le numéro de rang attribué à la demande d'instruction actuellement exécutée étant de préférence également transmis, et au moins un premier intervalle de temps étant de façon particulièrement préférentielle également transmis.

4. Procédé selon l'une des revendications précédentes, **caractérisé en ce que**
- pendant l'exécution de l'instruction, des demandes d'état sont transmises par le dispositif client (4.1, 4.2) au dispositif d'impression (14) selon des deuxièmes intervalles de temps prédéfinissables, et
- après réception d'une demande d'état, une réponse d'état est transmise par le dispositif d'impression (14) au dispositif client (4.1, 4.2).

5. Procédé selon la revendication 4, **caractérisé en ce qu'**après réception d'une réponse d'état, un message d'état est transmis par le dispositif client (4.1, 4.2) au dispositif gestionnaire (16).

6. Procédé selon l'une des revendications précédentes, **caractérisé en ce que**
- un effort d'instruction pour l'exécution de l'instruction du dispositif client (4.1, 4.2) est déterminé par le dispositif d'impression (14), et
- l'effort d'instruction déterminé est transmis au dispositif client (4.1, 4.2) et/ou à un serveur de comptabilité (20) pour un décompte par le dispositif d'impression (14).

7. Système de réseau (2) avec au moins un dispositif client (4.1, 4.2), au moins un dispositif gestionnaire (16) et au moins un dispositif d'impression (14),
- dans lequel le dispositif client (4.1, 4.2) est conçu pour mettre à disposition une première instruction pour l'exécution par l'au moins un dispositif d'impression (14),
- dans lequel le dispositif client (4.1, 4.2) comporte un dispositif de stockage (10.1, 10.2) conçu pour enregistrer l'instruction,
- dans lequel le dispositif client (4.1, 4.2) est conçu pour transmettre une demande d'instruction au dispositif gestionnaire (16),
- dans lequel le dispositif gestionnaire (16) est conçu pour gérer l'ordre d'exécution des instructions,
**caractérisé en ce que**
- le dispositif client (4.1, 4.2) est conçu pour transmettre des demandes selon des intervalles de temps prédéfinissables au dispositif gestionnaire (16), pour savoir si le dispositif d'impression (14) est disponible pour l'exécution de l'instruction du dispositif client (4.1, 4.2), et
- le dispositif gestionnaire (16) est conçu pour envoyer un signal de validation seulement en réponse à une demande du dispositif client (4.1, 4.2), lorsque le dispositif d'impression (14) est disponible pour l'exécution de l'instruction du dispositif client (4.1, 4.2),
- dans lequel, après réception du signal de validation, l'instruction enregistrée est transmise directement par le dispositif client (4.1, 4.2) dispositif d'impression (14) pour l'exécution de l'instruction.

8. Programme informatique avec des instructions exécutables sur un processeur, de manière à exploiter un système de réseau (2) à l'aide du procédé selon l'une des revendications 1 à 6.

9. Produit de programme informatique comprenant un programme informatique avec des instructions exécutables sur un processeur, de manière à exploiter un système de réseau (2) à l'aide du procédé selon l'une des revendications 1 à 6.
